# EUROPEAN PATENT APPLICATION

(11) **EP 1 149 675 A2**
(43) Date of publication of application: **31.10.2001**
(21) Application number: 01201384.3
(22) Date of filing: 17.04.2001
(51) Int. Cl.: B29B 17/00, B30B 9/32

(54) **Device for compacting small disposable synthetic containers**

(30) Priority: 28.04.2000 IT RE000018 U
(71) Applicant: Interpump Engineering S.r.l., 42100 Reggio Emilia (IT)
(72) Inventor: Montipo', Fulvio, 42100 Reggio Emilia (IT)
(74) Representative: Corradini, Corrado

(57) **Abstract**

A bottle squashing device comprises a seat (98) for positioning the bottle (97) between two compactor members mutually movable along the axis of said seat, one (92) of these acting as a support for the bottle and the other comprising, connected to a pressurized steam supply source, a delivery means (10) to be inserted into the bottle mouth.

## Description

This invention relates to a device for reducing the bulk of small disposable synthetic containers, typically PET bottles and the like.

Small disposable synthetic containers, such as the said bottles, generally of between 250 and 2000 ml capacity, are currently widely used for containing fluid products, typically drinkable liquids such as mineral water.

When such bottles have been emptied, the problem of their disposal arises, this being currently solved by sorted collection by which their constituent material can be recycled to safeguard the environment.

For this sorted collection, local councils provide the public with specific collection bins into which they are asked to dispose of the bottles after squashing or deforming them for evident reasons of bulk.

The main object of this invention is to provide a device able to drastically reduce the volume of such disposable bottles without requiring particular force by the user.

A further object of the invention is to provide a bottle squashing device able to compact bottles of even considerably different capacities.

A further object is to provide a bottle squashing device which can be used both in a domestic environment and in public locations such as bars and restaurants, and on means of transport such as trains and aircraft.

A further object is to attain said objectives within the context of a simple, reliable, robust, compact and low-cost construction.

Said objects are attained by a bottle squashing device presenting the characteristics defined in the claims.

In particular it comprises a hollow profiled body presenting an operating chamber or seat for loading the bottle, where it lies between two compactor members mutually movable along the axis of said chamber or seat, one of these acting as a support for the bottle and the other comprising, connected to a pressurized steam supply source, a delivery means to be fitted to the bottle mouth.

Said mutual movement can be achieved by user-operated means, preferably elastic means, for example a thrust spring acting on said support, which is preferably situated below the delivery means, this latter being fixed.

The aforesaid solution attains all the objects of the invention, as will be apparent from the ensuing detailed description given with reference to the accompanying drawings, in which:

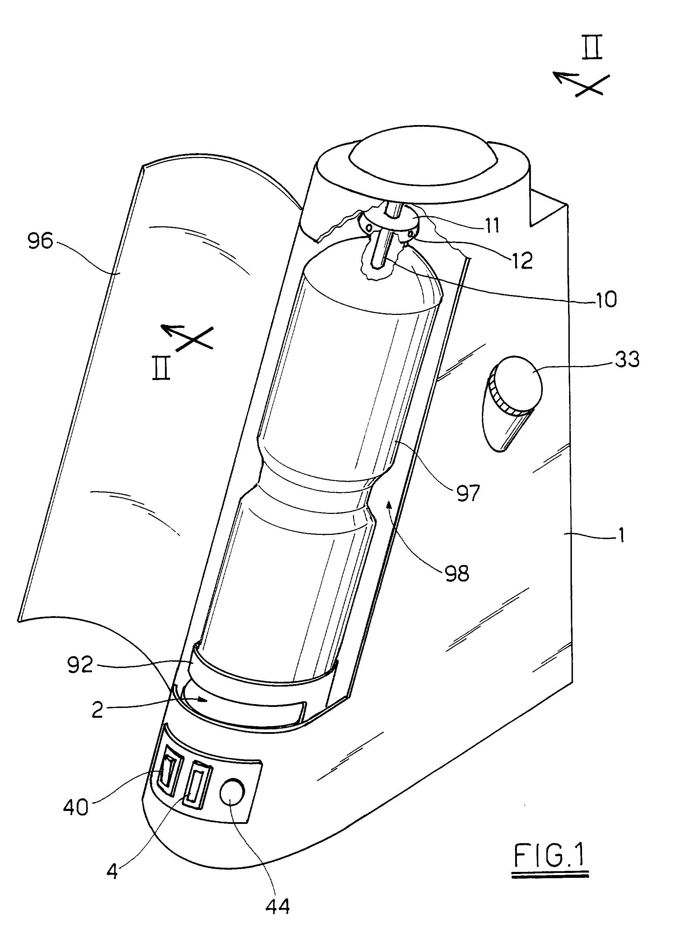

Figure 1 is a perspective view of the invention with the loading door open.

Figure 2 is a section on the line II-II of Figure 1, but with the door closed.

Said figures show a hollow body or casing 1 provided with non-slip support feet 99, and containing all the functional elements described hereinafter.

Said casing is made of a convenient material, which in the illustrated example is a rigid synthetic material shaped by hot forming.

The casing 1 is of vertically extending flattened shape, which in side view is that of a quadrilateral, and more precisely a right-angled trapezoid the inclined side of which is positioned at the front.

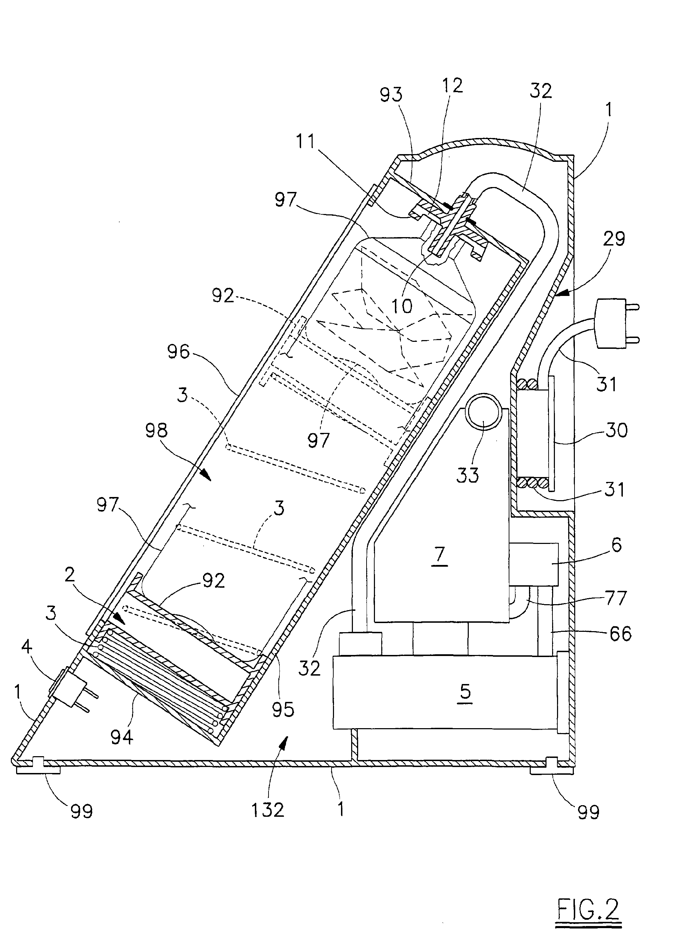

The mouth of a rear-lying seat 98, into which the bottle 97 to be compacted is placed, opens into said inclined side, or front wall, which is of arched cross-section (see Figure 2).

The seat 98 is in the form of a portion of cylindrical wall, and is shaped and dimensioned such as to be able to receive bottles 97 of different capacities, which in the illustrated example is of 2 litres.

In particular, said seat 98 comprises a rear base 95 inclined to the vertical, a lower transverse wall 94, an upper transverse wall 93 and a door 96, this latter being preferably transparent.

Between said two transverse walls 94 and 93 there is a disc structure 92 provided with two opposing recesses, the upper one acting as the retention seat for the base of the bottle 97 and the lower one receiving the upper turns of a spring 3 which at its other end rests against said lower transverse wall 94.

Between said two recesses of said disc structure 92 there is a frontal compartment 2 into which the fingers of the user's hand are inserted on discharging a compacted bottle, and on loading a bottle to be compacted.

As is well illustrated, at the centre of the upper transverse wall 93 there is positioned a downwardly projecting delivery nozzle 10 to be received in the neck of the bottle 97, and presenting an outer support ring for the mouth of said neck.

Said ring 11 is also provided with small radial vent orifices 12 to enable the steam and air to escape during the collapse of the bottle 97.

Said steam reaches the nozzle 10 via a tube 32 connected to the outlet of a steam generator of instantaneous vaporization type, this in the illustrated example being a boiler 5 with an armoured electrical resistance element.

Said boiler 5 is connected to the delivery side of the pump 6 by the tube indicated by 66 (see Figure 2), said pump 6 dipping into the water-containing reservoir 7 via the conduit 77.

The aforesaid elements are all contained within that compartment 132 of the casing 1 which is situated behind the seat 98, together with those accessories associated with these.

The reservoir 7 is filled via the filler 33 provided on the right side of the casing 1, electric power to said armoured resistance element and said pump 6 being provided via the cable 31 (Figure 2).

Said cable 31 is wound on a support 30 provided on the base of a recess 29 in the rear wall of the casing 1.

Finally, below the lower edge of the seat 98 there is a small control panel comprising a main on-off switch 40, a warning lamp 44, and a pushbutton 4 for controlling steam delivery.

By way of example, significant data of the said means include the following: thrust of the spring 3 between the two configurations of Figure 2, 2-6 kg; steam pressure in boiler, 1-4 bar; steam throughput, 20-60 cc/min; maximum compacting time, 15 sec; ratio of bottle final volume to initial volume, 1:3-1:5.

The device operates as follows.

On pressing the main switch 40, the resistance element of the boiler 7 is energized to raise this latter to its operating temperature.

At this point the pump 6 is operated to bring the circuit to its operating pressure, after which the pump stops and the device is ready for use.

After opening the door 96 the disc structure is lowered by operating with the fingers inserted into the compartment 2, and at the same time the neck of the bottle 97 is mounted over the nozzle 10, the disc structure then being released so that it rests against the base of the bottle.

After closing the door 96 the pushbutton 4 is pressed, and the steam generated by the boiler 7 is fed into the bottle, any excess being discharged through the orifices 12.

Heating the bottle causes it to weaken, at which point the bottle is squashed by the effect of the thrust of the spring 3.

On termination of squashing, the disc structure 92 lies in its raised position, for example that shown in Figure 2, and the collapsed bottle can be extracted.

The relative arrangement of said compactor elements can vary, and the seat 98 can be arranged horizontally, without on this account leaving the scope of protection defined by the following claims.

## Claims

1. A bottle squashing device, **characterised by** comprising a seat (98) for positioning the bottle (97) between two compactor members mutually movable along the axis of said seat, one (92) of these acting as a support for the bottle and the other comprising, connected to a pressurized steam supply source, a delivery means (10) to be inserted into the bottle mouth.

2. A device as claimed in claim 1, **characterised in that** said delivery means is fixed and the bottle support is movable.

3. A device as claimed in claim 2, **characterised in that** said support is moved by an elastic means.

4. A device as claimed in claim 3, **characterised in that** said elastic means consists of a thrust spring which lies between the base wall of said seat and said support.

5. A device as claimed in claim 1, **characterised in that** said support comprises a disc structure provided with two opposing recesses, one of which is provided to receive the base of the bottle and the other to receive one end of said thrust spring, said disc being provided with a lateral compartment for engagement by the user's fingers.

6. A device as claimed in claim 5, **characterised in that** said compartment lies between said two recesses.

7. A device as claimed in claim 1, **characterised in that** said delivery means comprises a nozzle to be inserted into the neck of the bottle.

8. A device as claimed in claim 7, **characterised in that** said nozzle is provided with vent paths for the excess steam and air.

9. A device as claimed in claim 8, **characterised in that** said vent paths comprise small orifices provided in the wall of a ring which is positioned about said nozzle in order to support the mouth of the bottle.

10. A device as claimed in claim 1, **characterised in that** said supply source is associated with said device.

11. A device as claimed in claim 11, **characterised in that** said supply source comprises a steam generator of instantaneous vaporization type, the inlet of which is connected to a pump with relative service reservoir.

12. A device as claimed in claim 1, **characterised by** comprising a body of vertically extending flattened shape, which in side view has the profile of a right-angled trapezoid.

13. A device as claimed in claim 12, **characterised in that** said seat is located in a position corresponding with said inclined side of said trapezoidal profile.

14. A device as claimed in claim 13, **characterised in that** said seat is closed by a door.

15. A device as claimed in claim 14, **characterised in that** said door is shaped as a portion of a cylindrical surface.
